# EUROPEAN PATENT APPLICATION

(11) **EP 4 712 496 A1**
(43) Date of publication of application: **18.03.2026**
(21) Application number: 25201971.6
(22) Date of filing: 12.09.2025
(51) Int. Cl.: H04N 23/52, H04N 23/51, B60R 11/04, G03B 17/08

(54) **TRUCK WITH A CORNER VIEW CAMERA MODULE**

(30) Priority: 13.09.2024 NL 2038634
(71) Applicant: DAF Trucks N.V., 5643 TW Eindhoven (NL)
(72) Inventor: VAN DEN BOOGAARD, Franciscus Josephus Frederik, 5643 TW Eindhoven (NL); RENTEMA, Date Willem Egbert, 5643 TW Eindhoven (NL); NAASTEPAD, Bart, 5643 TW Eindhoven (NL)
(74) Representative: V.O.

(57) **Abstract**

A truck comprises a corner view camera module with a support arm that encloses a downward facing camera device with a lens that protrudes from the support arm. An airflow guide is arranged for directing a local airflow around and across the lens. The airflow guide provides a drip edge to prevent water from dripping onto the lens. The drip edge has an asymmetry in that it has a lowest level upstream the lens and a highest level downstream the lens. At the lowest level the drip edge separates the airflow into a low velocity field and a high velocity field.

## Description

The invention relates to a truck with a cabin and a corner view camera module for recording images of objects present in a field of view that covers an area directly adjacent a front side and a lateral side of the truck.

Modern trucks may be equipped with a corner view camera module at a front corner region of the cabin, e.g. as an addition to side mounted rearward looking camera devices or conventional mirror solutions. The corner view camera module provides a generally downward directed field of view that covers blind spots directly below the windscreen and cabin doors of the truck to reduce the risk of accidents with objects, pedestrians, cyclists, or other vehicles that are present in those blind spots. Besides improving visibility, the corner view camera module can optionally also be part of an Advanced Driver Assistance System (ADAS) to provide features like lane departure warnings, collision avoidance, and automated braking.

However, compared to traditional mirror solutions, a corner view camera module may be more sensitive to soiling, since normal exposure to wind and weather may cause accumulation of dirt and water onto the surface of the downward facing lens. When the truck is parked or driving slowly in rainy weather, waterdrops including other particles may run down the sides of the truck and onto the camera lens, possibly occluding or distorting the camera view. When driving at larger velocities, waterdrops carried by the airflow around the camera module may also contaminate or blur the view through the lens.

It is an object of the present invention to minimize soiling of the camera lens of a corner view camera module, both at standstill as well as in driving conditions of the truck, with minimal reduction of the field of view.

### SUMMARY

Aspects of the invention relate to a truck as defined in the appended claims. The truck comprises a cabin and a corner view camera module provided at a rounded front-side corner region of the cabin. The corner view camera module is arranged for capturing images of objects present in a field of view that covers an area directly adjacent the front and a lateral side of the truck.

The corner view camera module comprises a support arm that extends outward from the rounded corner region. The support arm encloses a substantially downward facing camera device with a lens that protrudes from the support arm. The corner view camera module further comprises an airflow guide that is arranged for directing a local airflow around and across the lens. The airflow guide has a downward extension that forms a drip edge beyond the lens configured to prevent water from dripping onto the lens when the local airflow is negligible.

The drip edge has an asymmetry in a direction of the local airflow, in that the drip edge has a lowest level upstream the lens and a highest level downstream the lens. At the lowest level the drip edge is arranged for separating the airflow into a low velocity field that covers the lens and a high velocity field around the low velocity field for carrying waterdrops and other particles at a distance from the lens. The highest level of the drip edge is provided within the low velocity field.

Accordingly, the extended drip edge has a function in low flow conditions when the local airflow is negligible, i.e. at stand-still or low driving velocity, as well as in high flow conditions that occur when the local airflow is larger due to high speed driving or strong head or side winds. Due to the flow obstruction by the front of the truck, the rounded corner region of the cabin, as well as the angle at which the support arm extends from the cabin corner, the local airflow direction is not necessarily identical to the driving direction. During driving the local airflow is guided around the rounded corner region from the front side towards the lateral side of the truck, and may flow at an angle of about 40-50 degrees relative to the driving direction along the corner view camera module. The angle at which the local airflow passes across the corner view camera module may vary with the driving velocity of the truck, as well as wind speed and direction, yet said variation typically remains within about +/- 5 degrees. Hence the direction of the local airflow is relatively constant and can therefore be estimated rather accurately.

In low speed conditions gravity will cause waterdrops to move towards a lowest point. The extended drip edge provides a lowest point away from the lens, to prevent that the drops cross the surface of the lens. As a result the lens surface is kept clean.

Conversely, in high speed conditions the extended drip edge triggers flow separation directly upstream of the lens, so that waterdrops and other particles which are carried by the airflow pass the lens without touching the lens surface. Upstream the edge extends to a lower level than downstream, i.e. the edge is not symmetric in the direction of the local airflow. In this way the drip edge creates a flow separation region with a low velocity field that substantially covers the lens surface.

The highest level of the drip edge downstream the lens does not extend into the high velocity field, but is within the low velocity field in its entirety to avoid catching waterdrops. Furthermore, by having a highest level downstream the lens, the field of view towards the rear of the truck is increased. Upstream the drip edge can be lower, since the camera view is mainly across the front side and along the lateral side of the truck, e.g. to detect pedestrians on the co-driver side, and directly in front of the truck, rather than forwards. Hence the lower upstream edge does not obstruct the field of view.

To control the flow separation bubble, or separation between the low velocity field that covers the lens surface, and the high velocity field that directs waterdrops and other particles away from the lens surface, it is preferred that the downward extension of the drip edge gradually decreases from the lowest level to the highest level. Sharp angles, or acute variations in the shape and contour of the drip edge may generate vortices in the airflow that may locally change the air flow.

In some embodiments, the lowest level corresponds with an apex of the lens. For example, the lens may be convex, e.g. spherical or prismatic. The lowest level of the drip edge may be substantially aligned with the apex of the lens or slightly below the apex, so that the drag penalty of the drip edge extension upstream the lens is minimalized, while still providing a lowest point at a distance upstream the lens surface.

The highest level of the drip edge can be designed such that it corresponds with a base of the lens, or slightly below said base. In this way, it can be ensured that the highest level does not extend into the high velocity field of the local airflow, while providing a lowest point at a distance downstream the lens surface.

From aerodynamic perspective, the outer contour of the drip edge is preferably as sharp as possible to produce a large low velocity field in the airflow. However, legal requirements may demand a minimum radius on the outer edges. Therefore, the drip edge may have a rounded outer contour, e.g. with a minimum radius of 2,5 millimeters or more. In other words, the outer wall of the airflow guide facing away from the lens may have a rounded off transition towards the distal end, thus towards the drip edge. Conversely, the transition between the drip edge and the lens facing inner wall of the airflow guide may be sharp, or formulated differently the drip edge may have a sharp inner contour.

To further prevent that waterdrops and other particles reach the lens, the airflow guide may optionally comprise a groove between the drip edge and the lens. Such a groove effectively increases the downward extension of the drip edge and, by the larger space that is thus formed between the drip edge and the lens surface, provides a more pronounced lowest point away from the lens. For example, in some variants the groove may have a groove depth that, in the direction of the local airflow, gradually decreases from a deepest level upstream the lens to a shallowest level downstream the lens. In other words, the groove may provide a larger separation space between the lowest level of the drip edge and the lens, and a smaller separation space between the lens and the highest level of the drip edge.

In some embodiments the airflow guide further comprises a fin that extends from the airflow guide downstream the highest level of the drip edge in the direction of the local airflow, and at an angle to the driving direction of the truck. The fin suppresses fluctuations of the flow around the circular camera bulge. The mechanism of such flow fluctuations are well-known as the Von Karman vortex shedding, a repeating pattern of swirling vortices caused by a process known as vortex shedding, which is responsible for the unsteady separation of flow of a fluid around blunt bodies. Von Karman vortex shedding is strong in flows around cylindrical shapes. By adding the fin, the shape of the drip edge is elongated to prevent said vortex shedding. Preferably, in the downstream direction of the airflow, the longitudinal extension of the fin is longer than the cross section of the airflow guide. Alternatively, small protrusions may be applied to the airflow guide, parallel to the camera axis, on locations left and right just downstream of a largest cross-section of the airflow guide in the flow direction. However, this may result in drag increase. Alternatively, or additionally, the cross section of the airflow guide may have a variation in the downward direction, such as a taper.

Preferably, besides having an asymmetry in the direction of the airflow, the airflow guide is asymmetrical with respect to an optical centerline of the camera device. That is, the airflow guide may not be concentric with the optical centerline, but shifted off-center or tilted with respect to the optical centerline. Preferably the airflow guide does not have a cylindrical contour, or circular cross section. A more streamlined shape of the downstream half of the body may prevent vortex shedding may prevent vortex shedding. For example, the airflow guide may have a streamlined body, e.g. a wing shape, extending in the airflow direction.

In some embodiments, the field of view of the camera device covers a larger area along the lateral side of the truck than towards the front side. For example, the camera device may be tilted backwards in the driving direction of the truck. This can be achieved by providing a tilt angle between the optical centerline of the camera device and a vertical reference axis. Preferably the tilt angle is between 5 and 30 degrees, more preferably between 10 and 20 degrees, to ensure that the field of view still covers a large enough area on the front side of the truck. By limiting the downward extension of the lowest level of the drip edge upstream the lens, the drip edge does not significantly obstruct the field of view or viewing angle towards the front side of the truck.

As mentioned, the direction of the local airflow around the airflow guide is not identical to the driving direction of the truck, since the local airflow is guided around the rounded corner region of the cabin. As a result the local airflow may approach the airflow guide at an angle between 40 and 50 degrees with respect to the driving direction of the truck. To account for these angular offsets, the support arm may extend from the rounded corner region at an angle between 20 and 70 degrees, preferably between 30 and 50 degrees, with respect to the driving direction of the truck. In more general terms, the support arm may suspend the camera device in a streamline of the local airflow that follows a contour of the rounded corner region. The camera device is preferably provided at a distal tip of the support arm, e.g. at a distance from the cabin corner between 20 and 50 centimeter.

For minimal air drag, the support arm is preferably as small as possible. But viewing requirements may determine the position of the camera, hence the length of the support arm. For minimal air drag the support arm is preferably wing-shaped, e.g. having an airfoil like cross section. The thickness of the airfoil cross section is preferably as small as possible. Preferably, the camera device is provided at a distal tip of the wing-shaped support arm, i.e. at a distance from the cabin corner. The length of the wing-shaped support arm, or wing span, the angle of the wing-shaped support arm relative to the driving direction of the truck, as well as the distance between the camera device and the cabin corner may be chosen such that the field of view of the camera device covers the area in front of and along the lateral side of the truck.

To further minimize soiling of the lens surface, the lens can be coated with a (super)hydrophobic coating, e.g. a nanocoating. Such a hydrophobic coating repels water drops from the lens surface, and may additionally have anti-static and self-cleaning properties to keep dust and dirt particles away from the lens.

In accordance with the invention, a truck with a corner view camera module is provided as described above, comprising an airflow guide with a drip edge arranged for guiding waterdrops and other particles away from the camera lens. When the truck is driving the air passing around the rounded cabin region creates a local airflow around the corner view camera module at an angle to the driving direction. In the direction of the local airflow, the airflow guide forms a pocket configured to generate a wake across the lens that extends from the lowest level of the drip edge towards and beyond the highest level of the drip edge, to prevent soiling of the camera lens.

### BRIEF DESCRIPTION OF THE DRAWINGS

The invention will be further elucidated in the figures:
FIGs. 1A-B illustrate an embodiment of a truck with a corner view camera module;
FIGs. 2A-B provide a top view of an embodiment of the truck with corner view camera module;
FIG. 3 provides a detailed view of an embodiment of the corner view camera module with a drip edge;
FIG. 4 provides a section view of an embodiment of the corner view camera module, highlighting the drip edge;
FIG. 5 visualizes the local airflow velocity distribution around a cross section, parallel to the main flow direction, of the corner view camera module with drip edge;
FIG. 6 visualizes the near wall air velocity of the local airflow over the bottom surface of the corner view camera module with drip edge;
FIG. 7 illustrates another or further embodiment of the corner view camera module comprising a fin downstream the drip edge.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

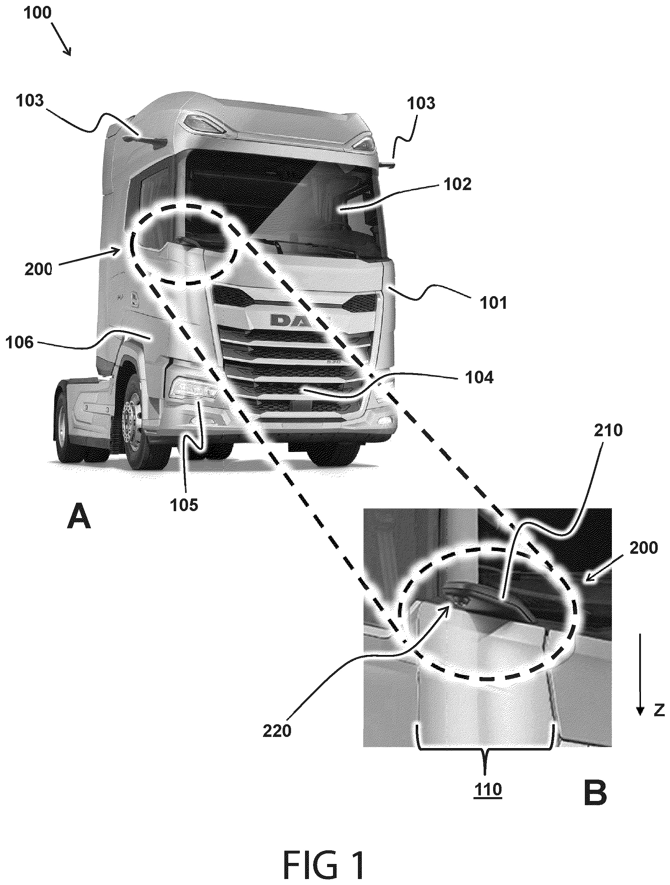

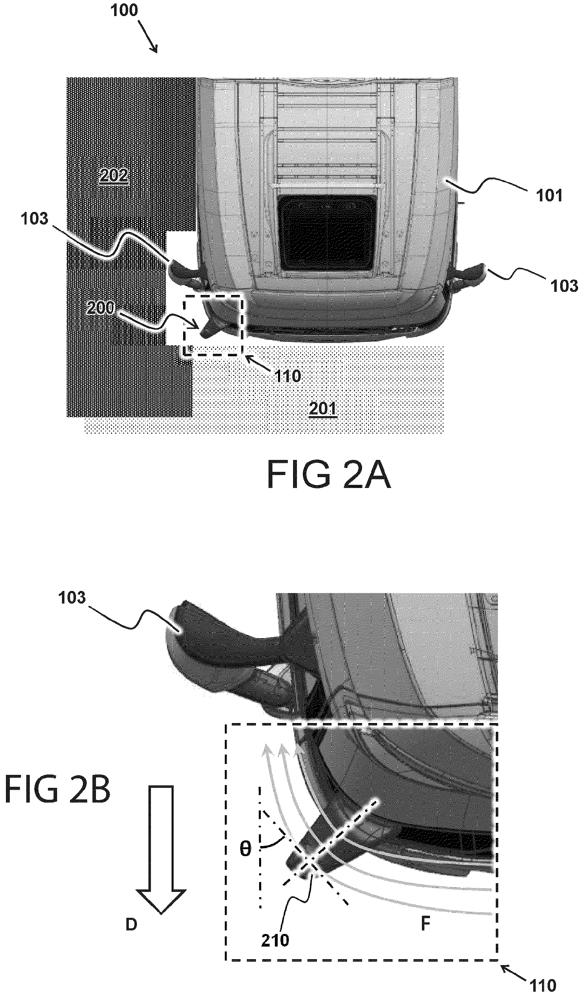

FIG. 1A illustrates an embodiment of a truck 100, in particular a tractor unit of a tractor-trailer combination. Truck 100 can alternatively be any other type of vehicle where the driver has a relatively high seating position above the road surface, and where dead spots occur in areas near or directly adjacent the front and lateral sides of the cabin 101, e.g. on the co-driver side of the cabin. To enable the driver to detect objects, people and other road users in these dead spot areas, a corner view camera module 200 is provided at a rounded front-side corner region 110 of the cabin. The corner view camera module 200 is suspended at a height above the road surface, e.g. directly below the windscreen 102, and is aimed downwards so that the corner view camera module 200 has a field of view that covers the areas 201, 202, sometimes referred to as Class VI and Class V fields of view, directly adjacent the front and lateral sides of the truck, as can also be seen in the top view of the truck 100 illustrated in FIG. 2A. In some jurisdictions it may be legally required to equip certain trucks with means for providing these fields of view. For this reason, the corner view camera module 200 is an addition to conventional rearward looking side cameras 103 or mirror systems. Another purpose of the corner view camera module 200 is to improve safety and maneuverability of the truck by allowing the driver to view areas directly in front of and alongside the cabin, e.g. in dead spots below the windscreen and side windows, that are not in the direct line of sight of the driver, and that are not visible by means of the side-mounted rearward looking camera or mirror systems 103 that are intended for use when the vehicle is traveling over the road.

Additionally, the corner view camera module 200 can optionally be used as part of an Advanced Driver Assistance System (ADAS) of the truck 100, e.g. to assist during lane keeping/switching, automatic braking or parking, and other maneuvers. The corner view camera module 200 can be provided only on one of the cabin's front corners, e.g. on the co-driver side of the cabin, or on both sides.

The detailed view of FIG. 1B illustrates that the corner view camera module 200 comprises a support arm 210 that extends outward from the rounded corner region 110, e.g. directly below the windscreen 102 or to the A-pillar between the windscreen and the side window, in contrast to side-mounted mirror or camera systems that are mounted further rearwards on the lateral side of the cabin. The support arm 210 suspends or encloses a downward facing camera device 220 at a distal end of the support arm 210. As illustrated, the lens of the camera device protrudes from the bottom side of the support arm 210 and may provide a field of view that simultaneously covers the front side of the truck, e.g. including the grille 104, the front corner region 110 of the cabin, e.g. including the head light 105, and the lateral side of the cabin, e.g. including the (co-)driver door 106 and/or one of the front wheels. The lens of the camera device 220 may be a wide-angle lens, e.g. with a convex, spherical or prismatic lens surface, to provide a wide panoramic or hemispherical image. Optionally the lens can be coated, e.g. with a hydrophobic or anti-static coating.

Further, switching to FIG. 2B, it can be seen that the support arm 210 suspends the camera device 220 in a streamline of the local airflow F that follows a contour of the rounded corner region 110. When the truck is moving forward in the driving direction D, air at the front side of the cabin is pushed aside and guided around the rounded corner regions 110, thereby creating a local airflow F that follows the rounded contour. The support arm 210 may extend at an angle θ between 20 and 70 degrees, preferably between 30 and 50 degrees, with respect to the driving direction D of the truck, so that the leading edge of the support arm is substantially perpendicular to the streamline of the local airflow. Preferably the support arm 210 has the shape of a wing to minimize aerodynamic drag of the corner view camera module. The camera device may be provided at a distal tip of the wing-shaped support arm 210.

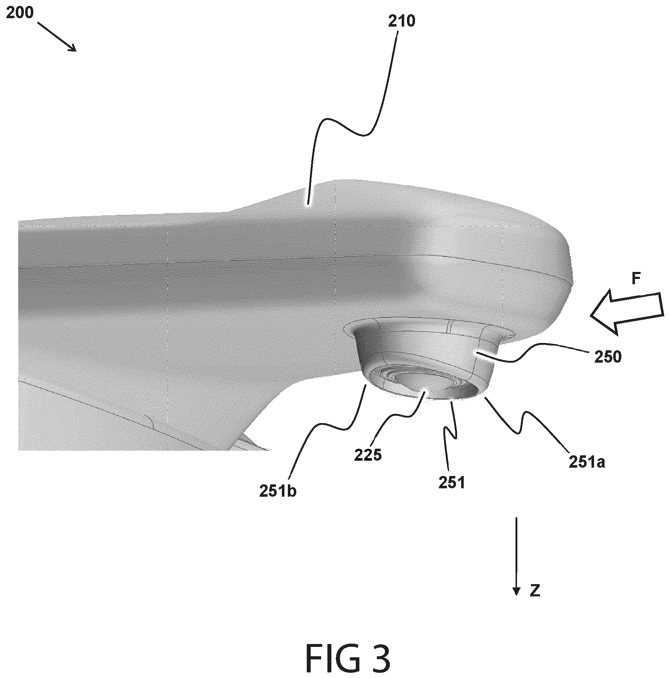

FIG. 3 provides another view of the corner view camera module 200, showing more clearly that an airflow guide 250 extends from the bottom side of the support arm 210, and at least partially covers the camera device 220. The airflow guide 250 extends downward from the bottom surface of the support arm 210 and is arranged for directing the local airflow around and across the lens 225. The airflow guide 250 has a downward extension, e.g. in the vertical downward direction Z. The downward extension forms a drip edge 251 beyond the lens 225. When the local airflow is negligible, waterdrops and other particles on the support arm 210 may drip down to the bottom side of the support arm 210, from where they are guided by gravity towards the drip edge 251, which provides a lowest point away from the lens 225. Accordingly it is prevented that the waterdrops and other particles drip onto the lens 225 where they may occlude or blur the view.

As can be seen in FIG. 3 the drip edge 251 has an asymmetry in the direction of the local airflow F, in that the drip edge 251 has a lowest level 251a upstream the lens 225 and a highest level 251b downstream the lens 225. The downward extension of the drip edge 251 may gradually decrease from the lowest level to the highest level.

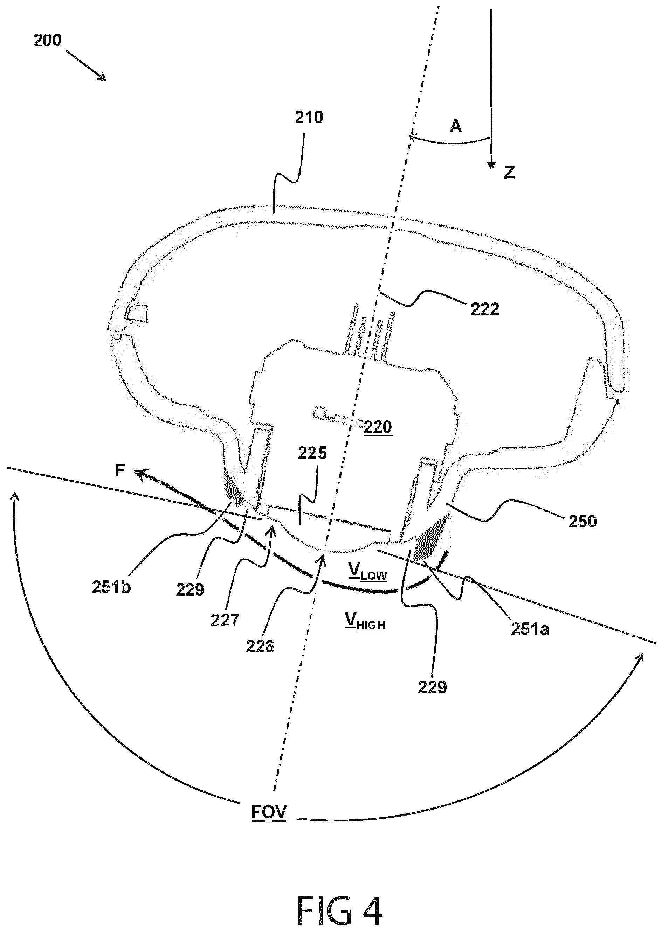

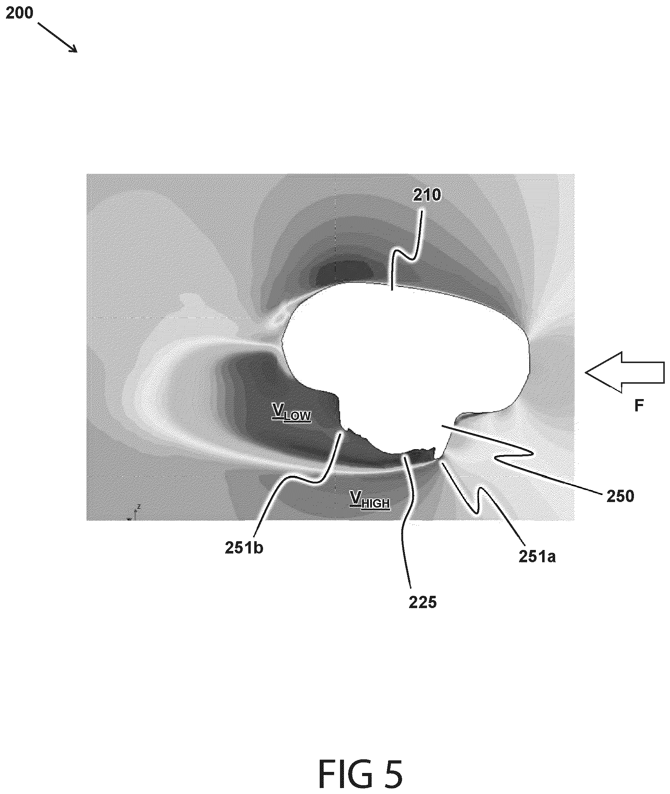

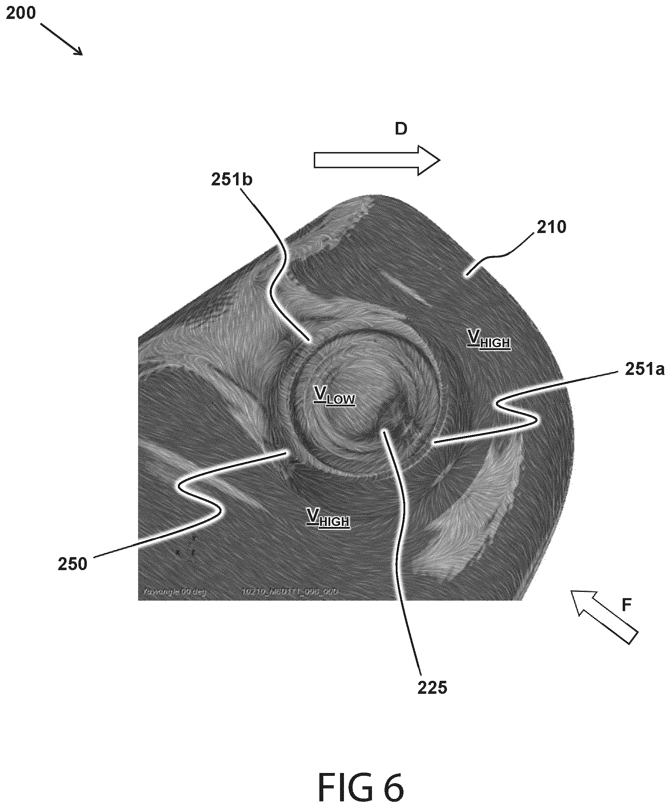

The asymmetry of the drip edge in the direction of the local airflow F is more clearly illustrated in the cross section view provided by FIG. 4. The resulting airflow pattern that is created by the drip edge 251 in high flow conditions, e.g. when the truck is driving, as visualized in FIGs. 5 and 6.

FIG. 5 illustrates an embodiment of the corner view camera module 200 where the airflow guide 250 comprises a drip edge 251a, 251b in accordance with the invention. The drip edge 251a, 251b is arranged for separating the airflow F upstream the lens 225, at the lowest level 251a of the drip edge, into a low velocity field V_{LOW} that covers the lens 225 and a high velocity field V_{HIGH} around the low velocity field V_{LOW}. Said flow separation ensures that the high velocity field V_{HIGH} carries waterdrops and other particles present in the airflow F at a distance from the lens 225, to prevent soiling of the lens. The low velocity field V_{LOW} effectively protects the lens against damage and soiling. The drip edge according to the invention creates a well-defined flow separation, with a low velocity field V_{LOW} which completely covers the lens 225.

The highest level 251b of the drip edge downstream the lens 225 is provided within the low velocity field V_{LOW}, and does not extend into the high velocity field V_{HIGH}, to avoid that the waterdrops and other particles are caught by the highest level of the drip edge.

FIG. 6 visualizes the local airflow F in a bottom view of the corner view camera module 200. As shown, the direction of the local airflow F deviates from the driving direction D of the truck, due to the airflow being guided around the rounded front cabin corners. Hence, the support arm 210 of the corner view camera module 200 may extend from the cabin corner region at an angle, such that the leading edge of the support arm 210 is substantially perpendicular to the direction of the local airflow F. Also from this view it is clear that the airflow guide 250 with drip edge 251 in accordance with the present invention causes a more defined flow separation, in which the low velocity field V_{LOW} completely covers the lens 225, and in which the high velocity field V_{HIGH} is removed from the lens.

In more general terms, in the direction of the local airflow F, the airflow guide 250 of the present invention forms a pocket configured to generate a wake across the lens 225 that extends from the lowest level 251a of the drip edge towards and beyond the highest level 251b of the drip edge.

Back to FIG. 4, it can be seen that the camera device 220 may be tilted backwards, e.g. towards the rear of the truck, to adjust the field of view FOV of the camera device 220. The tilt angle A between the optical centerline 222 of the camera device and a vertical reference axis can for example be between 5 and 30 degrees. As such, the airflow guide 250 can optionally be tilted backwards too. However, while the lens 225 may have a circular shape with a well-defined centerline, this is preferably not the case for the airflow guide 250. Preferably the airflow guide 250 is non-circular to avoid vortex generation in the airflow downstream the airflow guide 250. For the same reason the airflow guide 250 is preferably asymmetrical, e.g. offset and/or tilted, with respect to the optical centerline 222 of the camera device.

The lowest level 251a of the drip edge may correspond with an apex 226 of the lens. For example, the lowest level 251a may be at about the same height above the road surface as the apex 226 of the lens, or slightly lower. In this way, the reduction of the field of view FOV, or viewing angle, towards the front of the truck is minimized while still providing a local lowest point upstream the lens 225. Hence, instead of providing a relatively long drip edge upstream the lens to prevent soiling, the present invention uses a relatively short drip edge and relies on the concept that the drip edge is arranged for separating the flow into a low velocity field V_{LOW} that covers the lens, and a high velocity field V_{HIGH} that carries waterdrops and other particles at a distance, away from the lens surface. Conversely, downstream the lens 225 the highest level 251b of the drip edge 251 may correspond with a base 227 of the lens. For example, the highest level 251b may extend to a height above the road surface that is slightly below the base of the lens to provide a local lowest point downstream the lens 225 without the highest level 251b of the drip edge extending into the high velocity field V_{HIGH}. To ensure that waterdrops and other particles cannot not easily jump from the drip edge onto the lens 225, the airflow guide 250 may optionally comprise a groove 229 between the drip edge 251 and the lens 225. The groove 229 may be more pronounced upstream the lens than downstream the lens 225. For example, the groove 229 may have a groove depth that, in the direction of the local airflow F, gradually decreases from a deepest level upstream the lens 225 to a shallowest level downstream the lens.

While the drip edge 250 upstream the lens preferably has a relatively sharp leading edge to promote flow separation, regulations may require a minimum edge radius. For this reason, the drip edge 251 may have a rounded leading and trailing edge, or outer contour, as illustrated in FIG. 4. The inner contour of the drip edge, or the transition from the lowest point to the inner side of the airflow guide 250 that faces the lens, is preferably sharp to create flow separation, e.g. a wake across the lens.

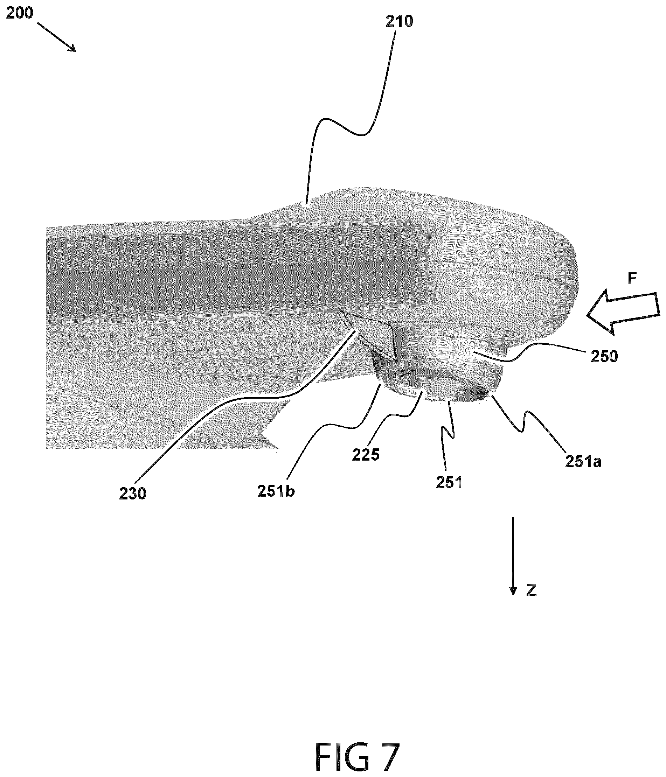

FIG. 7 illustrates another or further embodiment of the corner view camera module 200, in which the airflow guide 250 further comprises a fin 230 arranged for preventing Von Karman vortices downstream the airflow guide 250. The fin 230 extends from the airflow guide 250 downstream the highest level 251b of the drip edge, in the direction of the local airflow F. The fin 230 effectively provides the airflow guide with a further asymmetry in the flow direction, to ensure that the airflow separation is well-defined and, in particular, that the low velocity field V_{LOW} completely covers the lens under different driving speeds of the truck and under different wind or weather conditions.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a cabin and a corner view camera module provided at a rounded front-side corner region of the cabin and arranged for capturing images of objects present in a field of view that covers an area directly adjacent a front and lateral side of the truck, wherein the corner view camera module comprises a support arm that extends outward from the rounded corner region, the support arm enclosing a substantially downward facing camera device with a lens that protrudes from the support arm, wherein the corner view camera module further comprises an airflow guide that is arranged for directing a local airflow around and across the lens, wherein the airflow guide has a downward extension that forms a drip edge beyond the lens configured to prevent water from dripping onto the lens when the local airflow is negligible; and wherein the drip edge has an asymmetry in a direction of the local airflow, in that the drip edge has a lowest level upstream the lens and a highest level downstream the lens, wherein at the lowest level the drip edge is arranged for separating the airflow into a low velocity field that covers the lens and a high velocity field around the low velocity field for carrying waterdrops and other particles at a distance from the lens, and wherein the highest level of the drip edge is provided within the low velocity field.

2. The truck according to claim 1, wherein the downward extension of the drip edge gradually decreases from the lowest level to the highest level.

3. The truck according to any preceding claim, wherein the lowest level of the drip edge corresponds with an apex of the lens.

4. The truck according to any preceding claim, wherein the highest level of the drip edge corresponds with a base of the lens.

5. The truck according to any preceding claim, wherein the drip edge has a rounded outer contour and a sharp inner contour.

6. The truck according to any preceding claim, wherein the airflow guide comprises a groove between the drip edge and the lens.

7. The truck according to claim 6, wherein the groove has a groove depth that, in the direction of the local airflow, gradually decreases from a deepest level upstream the lens to a shallowest level downstream the lens.

8. The truck according to any preceding claim, wherein the airflow guide further comprises a fin that extends from the airflow guide downstream the highest level of the drip edge in the direction of the local airflow, and at an angle to the driving direction of the truck.

9. The truck according to any preceding claim, wherein the airflow guide is asymmetrical with respect to an optical centerline of the camera device.

10. The truck according to any preceding claim, wherein the camera device is tilted backwards in the driving direction of the truck, wherein a tilt angle between an optical centerline of the camera device and a vertical reference axis is between 5 and 30 degrees.

11. The truck according to any preceding claim, wherein the support arm extends from the rounded corner region at an angle between 20 and 70 degrees, preferably between 30 and 50 degrees, with respect to the driving direction of the truck.

12. The truck according to any preceding claim, wherein the support arm suspends the camera device in a streamline of the local airflow that follows a contour of the rounded corner region.

13. The truck according to any preceding claim, wherein the support arm is wing-shaped, and wherein the camera device is provided at a distal tip of the wing-shaped support arm.

14. The truck according to any preceding claim, wherein the lens is coated with a hydrophobic coating.

15. The truck according to any preceding claim, wherein, in the direction of the local airflow, the airflow guide forms a pocket configured to generate a wake across the lens that extends from the lowest level of the drip edge towards and beyond the highest level of the drip edge.
